# EUROPEAN PATENT APPLICATION

(11) **EP 3 322 123 A1**
(43) Date of publication of application: **16.05.2018**
(21) Application number: 16198778.9
(22) Date of filing: 15.11.2016
(51) Int. Cl.: H04L 12/24

(54) **METHOD FOR ORCHESTRATING NETWORK FUNCTIONS SHARED BETWEEN SERVICES DEPLOYED ON A 5G TELECOMMUNICATION NETWORK**

(71) Applicant: Nokia Technologies Oy, 02610 Espoo (FI)
(72) Inventor: SAYADI, Bessem, 91620 NOZAY (FR); OUTTAGARTS, Abdelkader, 91620 NOZAY (FR)
(74) Representative: Novagraaf Technologies

(57) **Abstract**

This invention relates to a telecommunication architecture comprising a service layer adapted to compose services as respective chains of network functions and network slices for instantiating said chains each slice being managed by an orchestrator (O_{A}, O_{B}, Oc), further comprising a specific network slice provisioned to instantiate common network functions among said chains, and wherein each of the other network slices of said set instantiates the network functions of a respective chain which are not in common with another chain.

## Description

### FIELD OF THE INVENTION

The invention relates to the realm of telecommunication networks and especially to the evolution towards 5G mobile networks.

### BACKGROUND OF THE INVENTION

Mobile network infrastructure are currently evolving toward fifth-generations (5G) architecture setting a paradigm of virtualization of the resources, which can be instantiated by so-called "network slices" so as to meet dynamically the requirements of services deployed on the network architecture.

Network slices have been introduced in a Next Generation Mobile Network (NGMN), 5G White paper, dated February 2015 and available on the website of the NGMN Alliance, and are currently under standardization work at the ETSI (European Telecommunication Standards Institute).

More concretely, network slices (also known as "5G slices") are a concept for running multiple logical networks as virtually independent business operations on a common physical infrastructure. This allows services to select the right 5G network functions and the right radio access technology tailored according to the requirements of the addressed use cases. In the same time, it allows avoiding all unnecessary functionalities.

For example, a service dedicated to fire monitoring in a forest would deploy the network function consisting in managing a set of sensors. However, it does need to deploy the function of mobility management since the sensors are not moving. Such a refinement in the design of the service / network interworking is not possible today and is addressed by the 5G architectures and e.g. the concept of network slices.

Some of the enabling technologies for deploying the 5G concepts already exist, like cloud technologies, software-defined networking (SDN) and Network Function Virtualization (NFV).

However, so far, no complete solutions have been proposed to fully address the deployment of the 5G architecture and slices paradigms. More concretely, the various propositions published by the NGMN Alliance let unaddressed the concrete management of the various network function (NF) used by the slices and in particular how to deal efficiently with network functions used by several slices of a same mobile network architecture.

### SUMMARY OF THE INVENTION

The object of the present invention is to alleviate at least partly the above mentioned drawbacks. More particularly, the invention aims to address the situation wherein a network function is shared between two or more network slices.

This object is achieved with a method for deploying services on a telecommunication network, consisting in composing said services as respective chains of network functions instantiated by a set of network slices, each slice being managed by an orchestrator, wherein a specific network slice is provisioned to instantiate common network functions among said chains, and wherein each of the other network slices of said set instantiates the network functions of a respective chain which are not in common with another chain.

Preferred embodiments comprise one or more of the following features, which can be taken separately or together, either in partial combination or in full combination:
- an orchestration manager is in charge of splitting received chains into chains corresponding to said specific network slice, and to said other network slices;
- said specific network slice can manage said common network functions according to priorities set to each of said services;
- an entity dedicated to the common functions scales said functions according to said priorities and to behaviors and states of the respective slices;

Another object of the invention is a computer program product comprising computer-executable instructions for performing the method as defined here-above, when run onto a data processing unit.

Another object of the invention is a telecommunication architecture comprising a service layer adapted to compose services as respective chains of network functions and network slices for instantiating said chains each slice being managed by an orchestrator, further comprising a specific network slice provisioned to instantiate common network functions among said chains, and wherein each of the other network slices of said set instantiates the network functions of a respective chain which are not in common with another chain.

Preferred embodiments comprise one or more of the following features, which can be taken separately or together, either in partial combination or in full combination:
- the telecommunication architecture further comprises an orchestration manager in charge of splitting received chains into chains corresponding to said specific network slice, and to said other network slices;
- said specific network slice is adapted to manage said common network functions according to priorities set to each of said services;
- the telecommunication architecture further comprises an entity dedicated to the common functions and adapted to scale said functions according to said priorities and to behaviors and states of the respective slices;
- the telecommunication architecture further comprises, in the control layer, a manager dedicated to said specific slice, adapted to control resources of said common network function.

Further features and advantages of the invention will appear from the following description of embodiments of the invention, given as nonlimiting examples, with reference to the accompanying drawings listed hereunder.

### BRIEF DESCRIPTION OF THE DRAWINGS

Fig. 1 shows an example of a functional architecture of a 5G network.
Fig. 2 shows an example of a functional architecture implementing the principles of the invention.
Fig. 3 shows an example of splitting of the virtual network functions composing two typical services.

### DETAILED DESCRIPTION OF THE INVENTION

The concept of network slices, through recent, is widely disclosed not only on the website of the NGMN Alliance (http://www.ngmn.org) but also in various publications, including educational papers published by the ETSI.

The Ericsson white paper "5G systems", published in January 2015, is particularly relevant. It defines network slices as a connectivity service defined by a number of customizable software-defined functions that govern geographical coverage area, duration, capacity, speed, latency, robustness, security and availability. The benefit of slicing mobile networks is not only the capability to deliver a wide range of connectivity services to any industry, but also to ensure that usage can be billed accordingly. It provides also greater insights into network physical resources utilization, as each slice is customized to match the level of delivery complexity required by the service or services using the slice.

As mentioned above, the concept of network slices uses existing technologies as enables like software-defined networking (SDN), NFVs and cloud technologies.

The benefit of SDN lies in its ability to provide an abstraction of the physical network infrastructure. It allows network slices to be customized and optimized for the deployment of a given service, and still be based on a same and common physical and logical network infrastructure.

NFV (Network Function Virtualization) enables considering the functions of a mobile network as a modular piece of software, rather than a set of interconnected hardware devices. This allows a great flexibility and scalability, since the function can be used and deployed "on demand" and regardless on its actual location and on its physical implementation.

According to an ETSI definition, a network function, NF, is a functional block within a network infrastructure that has well-defined external interfaces and a well-defined functional behavior.

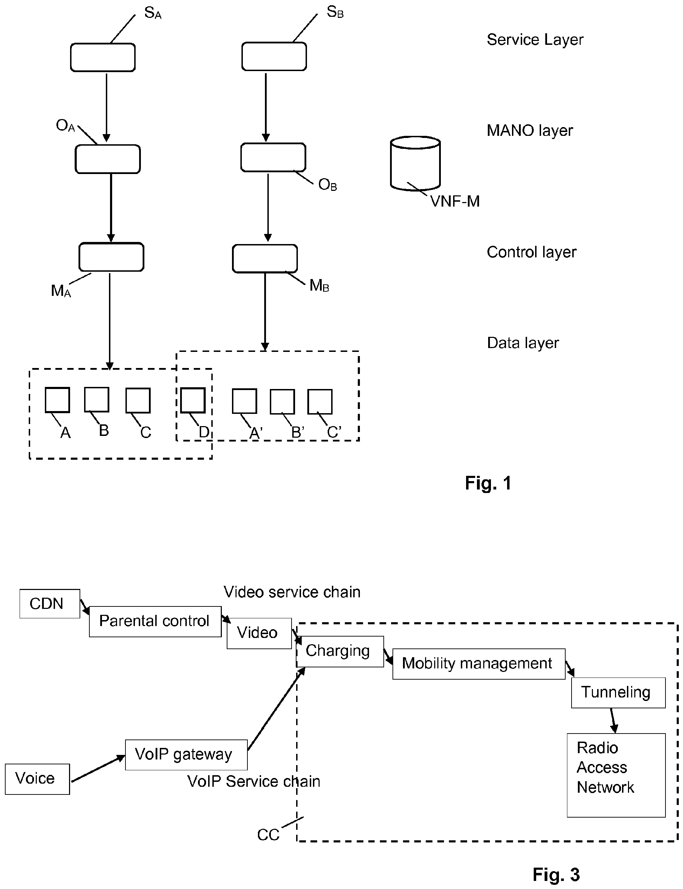

Figure 1 represents an example of deployment of two network slices, showing different layers so as to clarify how slices could be implemented down to the data layer.

One assumes, for the purpose of this example, that each service SA, SB, correspond to two respective network slices.

At the service layer, the services are expressed by respective sets of required Network Functions (NFs).

To deploy the service S_{A}, the following network functions are required: A, B, C, and D

To deploy the service S_{B}, the following network functions are required: A', B', C' and D.

Accordingly, each services is deployed by 3 dedicated NFs, and 1 NF, common to both services.

The 7 network functions are stored in a library of the Virtual Network Function Manager, VNF-M of the Management and Orchestration (MANO) Layer. In this same MANO layer, two orchestrators O_{A}, O_{B}, are in charge of the network slices implementing the services S_{A}, S_{B}, respectively. There is one slice orchestrator per slice. They can both communicate with the library VNF-M to get profiles and information regarding the deployed network functions.

At each orchestrator O_{A}, O_{B}, corresponds one manager, respectively M_{A}, M_{B}, in the Control layer, for managing an associated software-defined network (SDN) made of the network functions provisioned for the corresponding slice. Accordingly, the manager M_{A} is in charge of the network functions A, B, C, D, and the manager M_{B} is in charge of the network functions A', B', C' and D.

It appears in the figure that in order for each manager and each orchestrator to be able to manage fully both sets A, B, C, D and A', B', C', D, the network function D should belong to both management chain. For making this possible, under current state of the art, the network function should be instantiated twice, each instance being managed by the managers M_{A}, M_{B} and belongs to the corresponding network slices.

However, this implies practical issues since the same physical devices implementing the network function D are managed through two independent management chains. In consequence, the management cannot be optimized in terms of QoS (Quality of Service), including bandwidth, jitter, etc. since the managers are not aware of the resources required by other managers.

For this reason, the invention lies in deploying an independent management chain for the network functions D, which are common to several slices.

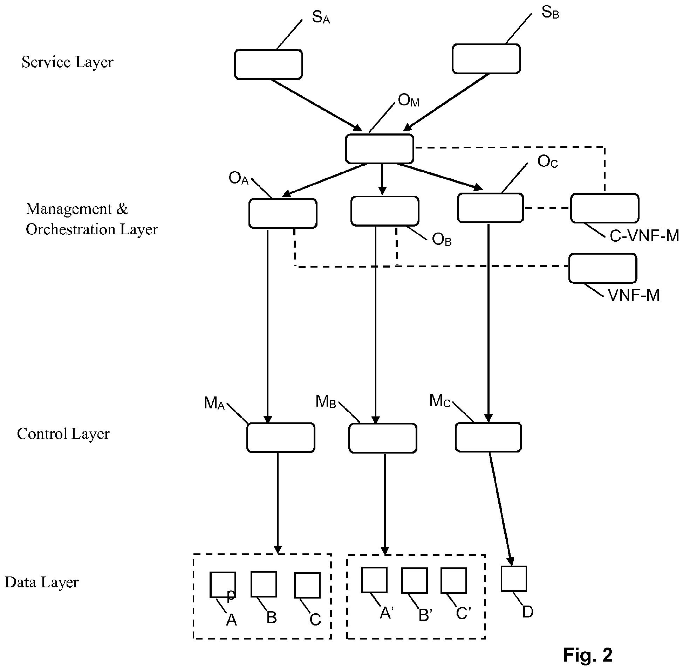

This solution is depicted in the example of figure 2.

The assumptions made for the example of figure 2 are basically the same as for the example of figure 1, except when otherwise indicated.

Here again, two services S_{A}, S_{B} are deployed on a same network architecture. At service layer, the services are composed as respective chains of network functions (NF). These chains define the services as linked relationships between network functions and specify how the services can be deployed in the network architecture, from a functional point of view and regardless of the physical implementation.

These "service chains" can be transmitted by the service layer to an orchestration manager O_{M} belonging to the Management and Orchestration (MANO) layer. They can be provided by also other entities, depending on architectural choices, to this orchestration manager O_{M}.

The orchestration manager is a new function compared with the legacy 5G architecture as defined by the NGMN Alliance. It has interfaces with the Service Layer and with orchestrators O_{A}, O_{B} of the network slices. It is in charge in analyzing the service chains received from the service layers so as to split them into dedicated chains and common chains. The common chains are chains made of network functions which are shared between at least two service chains. The dedicated chains are chains made of network functions used by only one service chain.

Taking back the example given for figure 1, the service S_{A} is composed by the following network functions: A, B, C, and D, and the service S_{B} is composed by the following network functions: A', B', C' and D.

According to these split chains, the orchestrator manager O_{M} can define the appropriate network slices, and dispatch the split chains to the orchestrators corresponding to thee network slices.

According to the invention, in spite of having simply one network slice per service like in legacy 5G architecture, a new slice is provisioned to instantiate the common network function, and the network slices instantiate only the network functions which are not in common with another chain.

Therefore, a first slice, managed by the Orchestrator O_{A} is provisioned to instantiate the network functions A, B, C corresponding to the service S_{A} and not in common with the service S_{B}. A second slice, managed by the Orchestrator O_{B}, is provisioned to instantiate the network functions A', B', C' corresponding to the service S_{B} and not in common with the service S_{A}. A third and specific slice, managed by the Orchestrator Oc is provisioned to instantiate the common network function D, used for both services S_{A}, S_{B}.

The orchestrators O_{A}, O_{B} corresponding to the dedicated network functions of the services can be operated by the services providers. However, the orchestrator Oc in charge of the common network functions (D) cannot be operated the services providers.

According to an embodiment of the invention, it can even manage priorities between the services and control the access to the resources associated with the common network function. This allows favoring certain services over others, thereby providing different QoS (Quality of Services). This may be useful, for instance, to give a higher priority to services like public safety network.

The Orchestrator Oc in charge of the slice instantiating the common network functions, D, has similar duties like usual orchestrators per NGNM Alliance and ETSI's specifications. In particular, it is in charge of selecting the best placement of the common network functions D according to the different uses cases supported by the network slices. This means that it can mix the various requirements imposed by the services S_{A}, S_{B} to draw common requirements which will direct this selection.

In addition, the MANO layer may comprise VNF (Virtual Network Function) managers, VNF-M, C-VNF-M. Several instances of the VNF-M function may exist, typically one per service provider.

The VNF managers, VNF-M, oversees the lifecycle management of the Network Functions' instances. They also have coordination and adaption role for configuration and event reporting between these instances and the Element and Network Management layer.

The common VNF manager, C-VNF-M has similar roles for the network slice corresponding to the common network function, D. It further has specific role due to the fact that the managed network function is shared between at least two slices. More particularly, it is in charge of scaling in/out the common network functions, D, according to the behavior and the state (e.g. traffic load...) of each instantiated network slices.

According to embodiments of the invention this common VNF manager can be implemented as a part of the Orchestrator Oc.

The MANO layer may also comprise various entities which are specified by the ETSI works or other standardization bodies. For instance, it comprises a Virtual Infrastructure Manager, VIM, which essentially controls the interactions of the virtual network functions with the computing, networking and storage resources of the chosen instances in the lower layers.

These lower layers mainly comprise a control layer and a data layer. In the data layer, figure 2 depicts the instances of the network functions for each slices, respectively A, B, C for the first slice, A', B', C' for the second slice, and D for the third slice.

To each of these slices correspond a manager, respectively, M_{A}, M_{B}, M_{C}, in the control layer.

The manager M_{C} of the specific network slice provisioned to instantiate common network functions D is also a new entity with regard to the literature published by ETSI or other stand-of-the-art proposals.

It is adapted to control resources of common network functions (D). Based on service policies defined by the orchestration manager O_{M}, it can provide short term modification to fulfil the SLA (for Service Level Agreement) for a given tenant (or service provider). Due to the decomposition and virtualization of core and Radio Access Network (RAN), this entity controls and reacts on data flow requirements if the network slices share their allocated resources.

It controls the resources (e.g. computing power, radio resources....) such as scheduling schemes may have to be used to avoid conflicts. It is important to highlight that this entity should avoid conflicts between different instantiated network slices.

To exemplify the invention, one can consider two services deployed on a same network architecture: a video service and a VoIP service. Figures 3 depicts schematically the compositions of both services as two chains of virtual network function, wherein the section CC represents a common chain.

The network functions belonging to this common chain CC are, according to the invention, instantiated as a specific slice provisioned to instantiate them, whereas the other network functions are instantiated by slices dedicated to the respective service.

The invention has been described with reference to preferred embodiments. However, many variations are possible within the scope of the invention.

## Claims

1. Method for deploying services on a telecommunication network, consisting in composing said services as respective chains of network functions instantiated by a set of network slices, each slice being managed by an orchestrator (O_{A}, O_{B}, O_{C}), wherein a specific network slice is provisioned to instantiate common network functions among said chains, and wherein each of the other network slices of said set instantiates the network functions of a respective chain which are not in common with another chain.

2. Method according to claim 1, wherein an orchestration manager (O_{M}) is in charge of splitting received chains into chains corresponding to said specific network slice, and to said other network slices.

3. Method according to any of the previous claims, wherein said specific network slice can manage said common network functions according to priorities set to each of said services.

4. Method according to the previous claim, wherein an entity dedicated to the common functions scales said functions according to said priorities and to behaviors and states of the respective slices.

5. Computer program product comprising computer-executable instructions for performing the method according to any of the previous claims, when run onto a data processing unit.

6. Telecommunication architecture comprising a service layer adapted to compose services as respective chains of network functions and network slices for instantiating said chains each slice being managed by an orchestrator (O_{A}, O_{B}, O_{C}), further comprising a specific network slice provisioned to instantiate common network functions among said chains, and wherein each of the other network slices of said set instantiates the network functions of a respective chain which are not in common with another chain.

7. Telecommunication architecture according to claim 6, further comprising an orchestration manager (O_{M}) in charge of splitting received chains into chains corresponding to said specific network slice, and to said other network slices.

8. Telecommunication architecture, according to any of claims 6 and 7, wherein said specific network slice is adapted to manage said common network functions according to priorities set to each of said services.

9. Telecommunication architecture according to any of claims 6 to 8, further comprising an entity dedicated to the common functions and adapted to scale said functions according to said priorities and to behaviors and states of the respective slices.

10. Telecommunication architecture according to any of the claims 6 to 9, further comprising in the control layer a manager (M_{C}) dedicated to said specific slice, adapted to control resources of said common network function.
